# EUROPEAN PATENT APPLICATION

(11) **EP 4 539 207 A1**
(43) Date of publication of application: **16.04.2025**
(21) Application number: 23203276.3
(22) Date of filing: 12.10.2023
(51) Int. Cl.: H01M 10/613, H01M 10/6555, H01M 50/24, H01M 50/244

(54) **MECHANICAL COOLING AND CAPACITY LOSS LIMITATION OF THE BATTERY PACK (BATTERY CELL)**

(71) Applicant: Adriaens, Nicolaas, 4532LS Terneuzen Zeeland (NL)
(72) Inventor: Adriaens, Nicolaas, 4532LS Terneuzen Zeeland (NL)

(57) **Abstract**

The invention relates to stabilizing a battery cell package. The sealed casing should be filled with the gas Argon (Ar, Atomic Number 18). The gas in the airtight housing has an insulating effect, which limits the weather influences from the outside. Also, the gas Argon (Ar, Atomic Number 18) has added value to fire safety. The free space between each battery cell contains a metal pin that ensures that the heat from the surrounding battery cell is guided to the outside. There is a heat transfer from the battery cell to the metal pin. The battery cell will dissipate its excess heat. The metal pin that conducts the heat protrudes outside the enclosure. When greater cooling capacities are needed, there is the option of placing the metal pin to two sides along the battery cell. The cool surface of the metal pin increases. The heat falls outside the battery airtight casing preventing the battery cell from overheating. The heat emitted to the outside can possibly be reused to heat up an external room. The heat can be useful for a space elsewhere. By stabilizing the package and reusing the heat, there is the possibility of using fewer larger battery packages.

## Description

Current battery packs have capacity losses due to excessively cold or hot temperatures external temperatures. The purpose is to keep out the weather conditions affecting the battery pack and conduct the heat from the battery cell to the outside to minimize capacity loss. Also, the fire safety of the overall battery pack will increase due to this invention.

### Drawings;

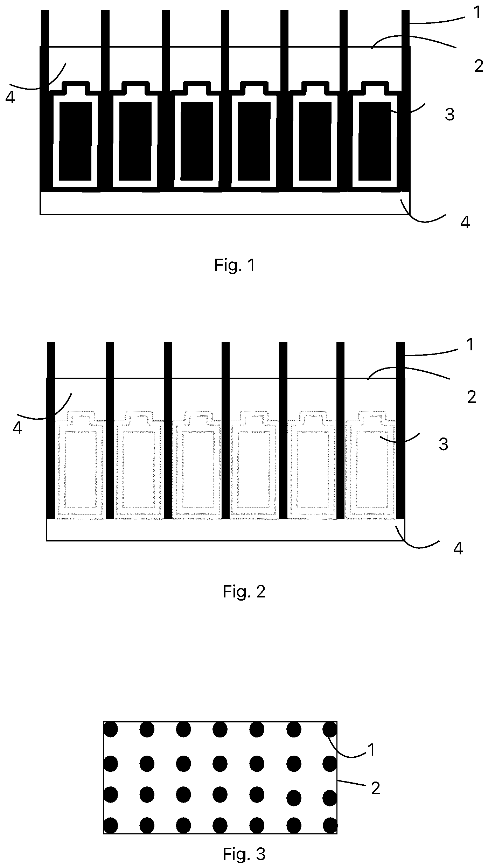

**Fig.1** is a view with open housing.
**Fig.2** is a view with open housing.
**Fig.3** is a top view.

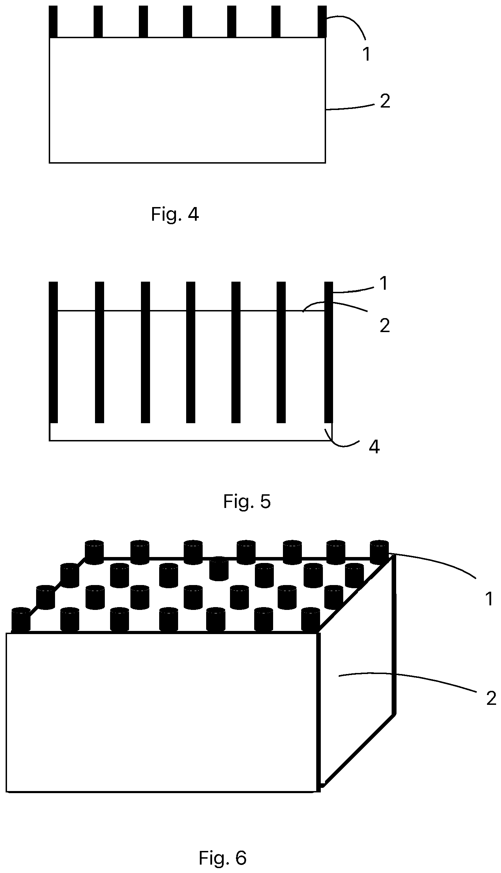

**Fig.4** is a view with closed housing
**Fig.5** is an open housing view without battery.
**Fig.6** is a view with a closed housing.

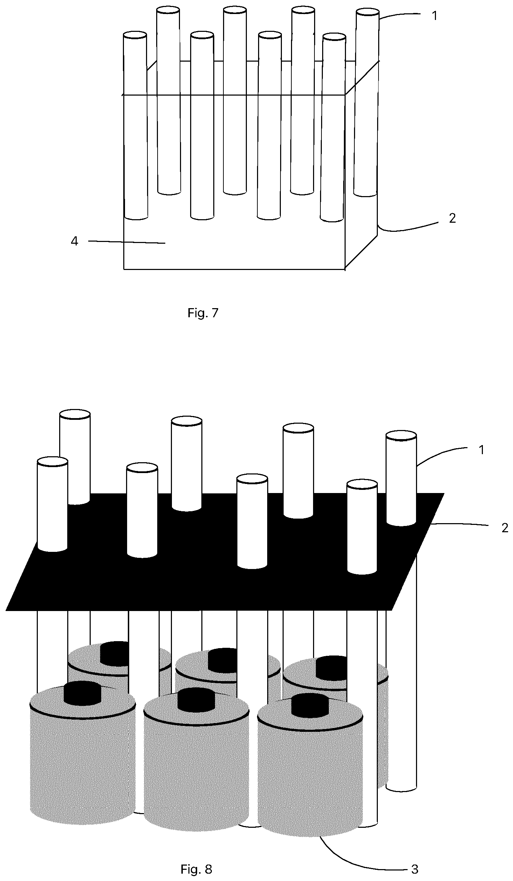

**Fig.7** is a view with open housing.
**Fig.8** is a view inside without housing.

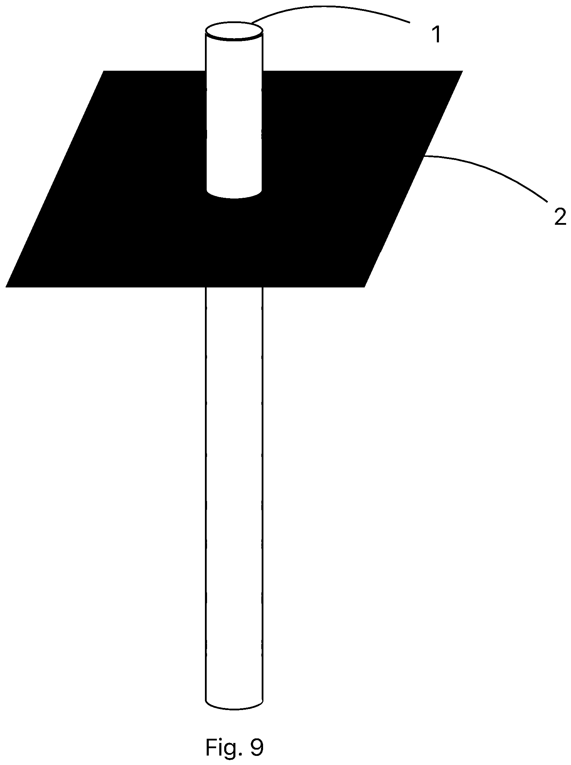

**Fig.9** is a view of an individual element that comes between each battery cell.

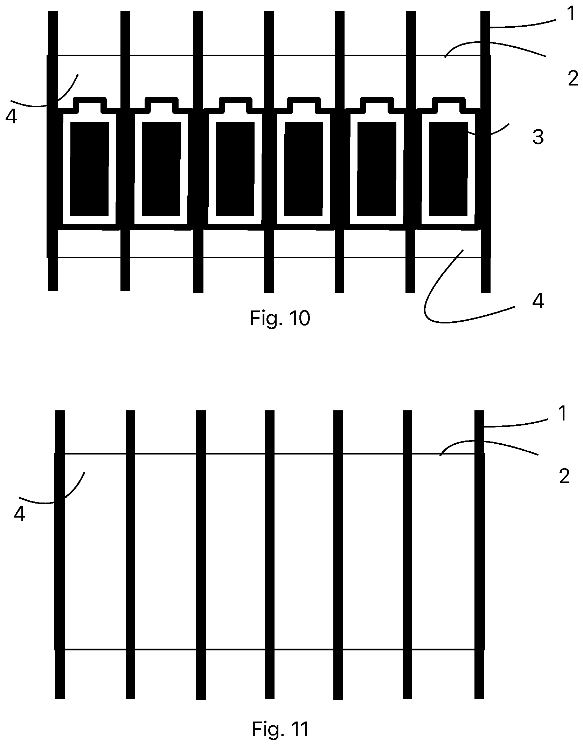

**Fig.10** is an open-housing view with the metal pin [1] lying both downwards and upwards along the battery cell. The cooling increases.
**Fig.11** is a view with open housing where the metal pin [1] is both down and up. The cooling increases.

### Components;

[1] Metal pin.
[2] Airtight housing.
[3] Existing Battery cell.
[4] Gas, Argon (Ar, atomic number 18)

## Claims

1. The metal pin **[1]** provides cooling between one or more battery cells. The metal pin **[1]** falls between the battery cell or cells. The contact between the battery cell **[3]** and the metal pin **[1]** causes heat transfer between the battery cell and the metal pin. The pin conducts the heat. The heat is dissipated outside the airtight housing **[2].** The round metal pin **[1]** will dissipate the heat and provides the possibility of reusing the heat for heating an external room. Its function is that the metal pin **[1]** allows the battery cell **[3]** to dissipate its heat. The metal pin **[1]** can optionally be positioned upwards and downwards for optimal cooling. This will increase the surface area of the metal pin **[1].** A larger cooling capacity is created. This allows the battery cell **[3]** to cool more easily. The airtight housing **[2]** must be filled with the gas Argon **[4].** The gas should provide insulation and fire protection. The amount of filling determines the correct insulation to the user purpose.

## Amended claims

### Amended claims in accordance with Rule 137(2) EPC.

1. The metal pin **[1]** provides cooling between one or more battery cells. The metal pin **[1]** falls between the battery cell or cells. The contact between the battery cell **[3]** and the metal pin **[1]** causes heat transfer between the battery cell and the metal pin. The pin conducts the heat.

2. The heat is dissipated outside the airtight housing **[2].** The round metal pin **[1]** will dissipate the heat and provides the possibility of reusing the heat for heating an external room. Its function is that the metal pin **[1]** allows the battery cell **[3]** to dissipate its heat.

3. The metal pin **[1]** can be positioned upwards and downwards for optimal cooling. This will increase the surface area of the metal pin **[1].** A larger cooling capacity is created. This allows the battery cell **[3]** to cool more easily.

4. The airtight housing **[2]** must be filled with the gas Argon **[4].** The gas should provide insulation and fire protection. The amount of filling determines the correct insulation to the user purpose.
